# EUROPEAN PATENT SPECIFICATION

(11) **EP 3 131 235 B1**
(45) Date of publication and mention of the grant of the patent: **05.10.2022**
(21) Application number: 16166113.7
(22) Date of filing: 20.04.2016
(51) Int. Cl.: H04W 4/80, H04L 12/28

(54) **METHOD AND APPARATUS FOR CONTROLLING DEVICE**
VERFAHREN UND VORRICHTUNG ZUR STEUERUNG EINER VORRICHTUNG
PROCÉDÉ ET APPAREIL DE COMMANDE D'UN DISPOSITIF

(30) Priority: 11.08.2015 CN 201510491263
(43) Date of publication of application: 15.02.2017
(73) Proprietor: Xiaomi Inc., Beijing 100085 (CN)
(72) Inventor: HOU, Enxing, Beijing 100085 (CN); MENG, Deguo, Beijing 100085 (CN); HEI, Lijun, Beijing 100085 (CN)
(74) Representative: Steinbauer, Florian

(56) References cited:
- EP-A1- 1 263 167
- EP-A1- 2 563 039
- CN-A- 104 301 758
- US-A1- 2013 265 229
- US-B1- 6 523 696

## Description

### FIELD

The present disclosure relates to communication technology field, and more particularly, to a method and an apparatus for controlling a device.

### BACKGROUND

Various devices emerge with the development of technology and the increase of user demand. Air conditioners, humidifiers and air purifiers are becoming essential home appliances in every home. Usually, operation parameters of a device (e.g. an air conditioner) have to be adjusted manually by the user when the device is used, such that the device operates in an optimal mode for the user, which involves complicated operations and brings about a lot of inconvenience.

EP 2 563 039 A1 describes a method for controlling devices like air conditioning systems using an operation terminal and a control terminal. A command including an identifier of a device to be controlled is sent from the operation terminal to the control terminal so that the control terminal can control the respective device.

EP 1 263 167 A1 describes a method for controlling devices in an automation network. A controller is used to send a query command including an identifier of a target device to a repeating device so that the repeating device that is identified by the identifier can collect information from further devices that can be reached by the repeating device but not by the controller.

US 6 523 696 B1 describes a method for controlling different device in one of two home networks, the networks comprising different protocols. A device in a first one of the networks can be controlled by a device in a second one of the networks by accessing a PC in the first of the networks.

US 2013/265229 A1 discloses a control of a remote device based on gestures, in which a sensor coupled to a user's skin is used to determine gestures performed by the user. A processing module may determine a gesture that is being performed by the user's hand based on motion data and/or pressure data, and a command may be transmitted to the remote device that indicates an action the remote device is to perform in response to the determined gesture.

CN104301758A discloses a system for pushing videos. The method comprises the steps that an identity label of a terminal device is received; the user information related to the identity label is acquired, wherein the user information comprises user personal information and the history watching record of the user; the video content is selected according to the user information; the selected video content is pushed to a smart television, and the smart television plays the videos according to the video content. Due to the fact that the identity label of the terminal device, the current user is automatically recognized, the video content is selected for the user according to the user information, the video content is pushed to the smart television to be played, and the video content is recommended for the user more precisely.

### SUMMARY

In order to overcome defects in the related art, embodiments of the present disclosure provide a method and an apparatus for controlling a device.

According to a first aspect of embodiments of the present disclosure, there is provided a method for controlling a device according to claim 1.

Advantageously, the method further includes: establishing an association relationship with a wearable device; obtaining the device identification and the operation parameter of the associated wearable device, and storing the device identification and the operation parameter in the association relationship table.

Advantageously, obtaining the operation parameter corresponding to the device identification includes: obtaining the operation parameter corresponding to the device identification from the operation mode configuration information.

Advantageously, obtaining the operation parameter corresponding to the device identification includes: obtaining the operation parameter corresponding to the device identification, in response to determining that the wearable device is an associated device according to the device identification.

Advantageously, obtaining the operation parameter corresponding to the device identification includes: obtaining the operation parameter corresponding to the device identification, in response to determining that the wearable device is located within a preset range.

According to a second aspect of embodiments of the present disclosure, there is provided a method for controlling a device. The method includes: detecting a trigger command; and broadcasting operation mode configuration information containing a device identification of a wearable device, in response to the detected trigger command, in which the operation mode configuration information indicates a smart home device to operate according to an operation parameter corresponding to the device identification.

Advantageously, in response to the detected trigger command includes: in response to detecting that the wearable device is tapped for a preset number of times; or in response to detecting that the wearable device is shaken for a preset number of times.

Advantageously, the operation mode configuration information further includes the operation parameter corresponding to the device identification.

According to a third aspect of embodiments of the present disclosure, there is provided an apparatus for controlling a device according to claim 5.

Advantageously, the obtaining unit further includes: an establishing sub-unit, configured to establish an association relationship with a wearable device; and a storing sub-unit, configured to obtain the device identification and the operation parameter of the associated wearable device, and to store the device identification and the operation parameter in the association relationship table.

Advantageously, the obtaining unit includes: a second obtaining sub-unit configured to obtain the operation parameter corresponding to the device identification from the operation mode configuration information received by the receiving unit.

Advantageously, the obtaining unit includes: a third obtaining sub-unit configured to obtain the operation parameter corresponding to the device identification, in response to determining that the wearable device is an associated device according to the device identification received by the receiving unit.

Advantageously, the obtaining unit includes: a fourth obtaining sub-unit configured to obtain the operation parameter corresponding to the device identification received by the receiving unit, in response to determining that the wearable device is located within a preset range.

According to a fourth aspect of embodiments of the present disclosure, there is provided an apparatus for controlling a device. The apparatus includes: a detecting unit, configured to detect a trigger command; and a broadcasting unit, configured to broadcast operation mode configuration information containing a device identification of a wearable device, in response to the trigger command detected by the detecting unit, in which the operation mode configuration information indicates a smart home device to operate according to an operation parameter corresponding to the device identification.

Advantageously, the broadcasting unit includes any one of the following sub-units: a first responding sub-unit, configured to respond to detecting that the wearable device is tapped for a preset number of times; and a second responding sub-unit, configured to respond to detecting that the wearable device is shaken for a preset number of times.

Advantageously, the operation mode configuration information further includes the operation parameter corresponding to the device identification.

According to a fifth aspect of embodiments of the present disclosure, there is provided an apparatus for controlling a device. The apparatus includes: a processor, and a memory configured to store instructions executable by the processor, in which the processor is configured to: receive operation mode configuration information broadcast by a wearable device, the operation mode configuration information having a device identification corresponding to the wearable device; obtain an operation parameter corresponding to the device identification; and operate according to the operation parameter.

According to a sixth aspect of embodiments of the present disclosure, there is provided an apparatus for controlling a device. The apparatus includes: a processor; and a memory configured to store instructions executable by the processor. The processor is configured to: detect a trigger command; and broadcast operation mode configuration information containing a device identification of a wearable device, in response to the detected trigger command, in which the operation mode configuration information indicates a smart home device to operate according to an operation parameter corresponding to the device identification.

According to a seventh aspect of embodiments of the present disclosure, there is provided a system for controlling a device according to claim 9.

According to the embodiments of the present disclosure, the technical solution may include the following advantageous effects.

In the present disclosure, the wearable device sends out the operation mode configuration information containing the device identification, such that the smart home device may obtain the operation parameter corresponding to the device identification and operate according to the operation parameter. In the present disclosure, the smart device may operate automatically according to the corresponding operation parameter as long as the device identification of the wearable device is detected, and thus the user does not need to manually adjust the operation mode of the smart device frequently, which brings convenience to the user.

In the present disclosure, the operation parameter is obtained from the preset association relationship table, which is easy to implement, and thus the operation mode configuration information sent by the wearable device only needs to carry the device identification, which reduces the resource consumption of the wearable device.

The smart home device in the present disclosure may establish the association relationship with the wearable device in advance and store the device identification and the operation parameter of the associated wearable device in the association relationship table, which is easy to implement, and thus the operation mode configuration information sent by the wearable device only needs to carry the device identification, which reduces the resource consumption of the wearable device.

The smart home device in the present disclosure may directly parse out the device identification and the operation parameter upon receiving the operation mode configuration information, such that it is possible to determine the operation parameter corresponding to the wearable device quickly, thus improving the working efficiency.

In the present disclosure, it is first determined that the wearable device is the associated device according to the device identification, before the operation parameter corresponding to the device identification is obtained, which may improve the security performance of the smart home device.

In the present disclosure, the corresponding operation parameter is further obtained after it is determined that the wearable device is within a close range, which facilitates flexible control on the operation of the smart home device and thus brings convenience to the user.

The wearable device in the present disclosure may send out the operation mode configuration information containing the device identification automatically upon receiving the trigger command from the user, the operation mode configuration information indicating the smart home device to operate according to the operation parameter corresponding to the device identification, such that in the present disclosure, it is unnecessary for the user to manually adjust the operation mode of the smart device frequently, which brings convenience to the user.

In the present disclosure, the operation mode configuration information may be sent by the wearable device rapidly for controlling the smart home device, as long as the user perform simple operations, which is simple to implement and brings convenience to the user.

In the present disclosure, since the operation mode configuration information of the wearable device also carries the preset operation parameter, the smart home device may directly parse out the device identification and the operation parameter upon receiving the operation mode configuration information, such that it is possible to determine the operation parameter corresponding to the wearable device quickly, thus improving the working efficiency.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is schematic diagram showing an application scene in which a method for controlling a device according to an example embodiment of the present disclosure is applied.
Fig. 2A is a flow chart of a method for controlling a device according to an example embodiment of the present disclosure.
Fig. 2B is a schematic diagram of a smart home application in a smart terminal according to an example embodiment of the present disclosure.
Fig. 3 is a flow chart of a method for controlling a device according to an example embodiment of the present disclosure.
Fig. 4 is a block diagram of an apparatus for controlling a device according to an example embodiment of the present disclosure.
Fig. 5 is a block diagram of another apparatus for controlling a device according to an example embodiment of the present disclosure.
Fig. 6 is a block diagram of another apparatus for controlling a device according to an example embodiment of the present disclosure.
Fig. 7 is a block diagram of another apparatus for controlling a device according to an example embodiment of the present disclosure.
Fig. 8 is a block diagram of an apparatus for controlling a device according to an example embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of apparatuses and methods consistent with aspects related to the disclosure as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that terms such as "first," "second," and "third" are used herein for describing various information, but the information should not be limited by these terms. The terms are only used for distinguishing the information of the same type from each other. For example, first information may also be called second information, and similarly, the second information may also be called the first information, without departing from the scope of the present disclosure. As used herein, the term "if' may be construed to mean "when" or "upon" or "in response to determining," depending on the context.

A method for controlling a device according to embodiments of the present disclosure may be applied to adjust operation parameters of a smart home device. The smart home device may include a smart air conditioner, a smart humidifier and a smart air purifier. The operation parameters correspond to the smart home device. For example, the operation parameters of the smart air conditioner include a mode parameter (refrigerating mode, heating mode, dehumidifying mode, etc.), temperature, air speed and air direction; the operation parameters of the smart humidifier may include moisture intensity, etc.; the operation parameters of the smart air purifier may include air volume, etc. The method according to embodiments of the present disclosure will describe how to realize automatic working of the smart home device according to the operation parameters set by a user.

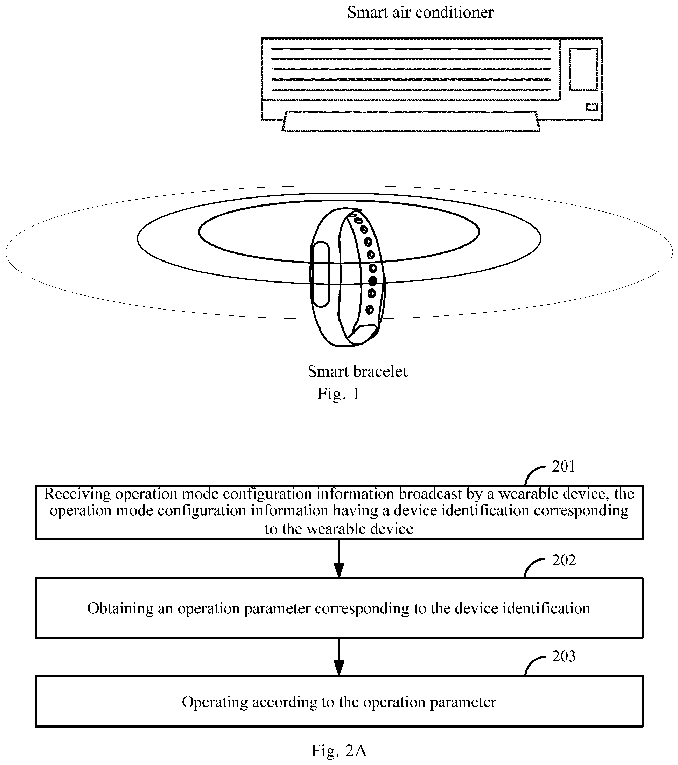

To realize the above objective, embodiments of the present disclosure provide an application scene in which the method for controlling a device is applied. Referring to an example of Fig. 1, if it is intended to realize automatic working according to the operation parameters set by the user, it is necessary to obtain a device identification of a wearable device of the user and then obtain the operation parameter corresponding to the device identification. In such a way, it is possible to work automatically according to the operation parameters.

Based on the principle, Fig. 1 includes a wearable device used to send operation mode configuration information. This embodiment exemplifies a smart bracelet that sends the operation mode configuration information. In practical applications, the wearable device may be any portable smart device integrated with a communication function, such as a smart hat, a smart watch, smart shoes or a smart ring which is wearable by the user. Fig. 1 further includes a smart home device. This embodiment exemplifies a smart air conditioner, and other home devices, like a humidifier, are also feasible. The smart home device is used to receive the operation mode configuration information sent by the wearable device and operate automatically according to the corresponding operation parameter. The wearable device and the smart home device may have a communication component, such as a bluetooth module or a Wi-Fi network module, and the wearable device and the smart home device may communicate with each other via their communication components.

Fig. 2A is a flow chart of a method for controlling a device according to an example embodiment of the present disclosure. As shown in Fig. 2A, the method may be applied in the smart home device in Fig. 1, and include the following steps.

In step 201, operation mode configuration information broadcast by a wearable device is received, in which the operation mode configuration information includes a device identification corresponding to the wearable device.

In this embodiment of the present disclosure, each of the smart air conditioner and the smart bracelet may be equipped with a communication component. As an example embodiment, the communication component may be a bluetooth component. The smart bracelet may broadcast the operation mode configuration information around, and thus within a certain distance range, the smart air conditioner may receive the operation mode configuration information and obtain the device identification corresponding to the smart bracelet by parsing the information.

The device identification may be identification information capable of identifying the wearable device and carried in the operation mode configuration information, such as a serial number of the wearable device, an ID of the wearable device, a device name, or a MAC (Media Access Control) address of the information, as long as it may identify the wearable device uniquely, which will not be limited herein.

In step 202, an operation parameter corresponding to the device identification is obtained.

The smart home device may determine the operation parameter corresponding to the wearable device according to the device identification carried in the operation mode configuration information, after receiving the operation mode configuration information broadcast by the wearable device.

It is possible to obtain the operation parameter corresponding to the device identification in any one of the following ways.

First way: the operation parameter corresponding to the device identification is obtained from a preset association relationship table recording correspondence between device identifications and operation parameters of associated wearable devices.

In this embodiment, the association relationship table is established in advance, and correspondence between device identifications and operation parameters of all associated wearable devices is recorded in the association relationship table; the operation mode configuration information sent by the smart bracelet may only carry the device identification, and the smart air conditioner searches the association relationship table according to the device identification so as to obtain the corresponding operation parameter.

With respect to the above embodiment, the operation parameter is obtained by using the preset association relationship table, which is easy to implement. Moreover, the operation mode configuration information sent by the wearable device may only carry the device identification, which reduces the resource consumption of the wearable device.

The association relationship table may be obtained in the following steps: establishing an association relationship with a wearable device; obtaining the device identification and the operation parameter of the associated wearable device, and storing the device identification and the operation parameter in the association relationship table.

In this embodiment, in order to establish the association relationship with the wearable device, the smart terminal may be used to establish the association relationship between the wearable device and the smart home device, or the wearable device and the smart home device may directly establish the association relationship between them. The following embodiments will illustrate the two manners for establishing the association relationship respectively.

First manner: the smart terminal is used to establish the association relationship between the wearable device and the smart home device.

In this embodiment of the present disclosure, the smart terminal may be a smart phone, a tablet computer, a personal digital assistant (PDA), an e-book reader, a multimedia player, etc. Usually, when the user uses the smart terminal to establish the association between the wearable device and the smart home device, this process is realized by client software installed in the smart terminal. For example, in an implementation, the client software may be a "Smart Home" application, and the user may obtain corresponding using permission by establishing a binding relationship respectively with the smart home device and the wearable device in the home environment via the application. After the binding relationships are established, the user may use the application for centralized management and control of the smart home device and the wearable device.

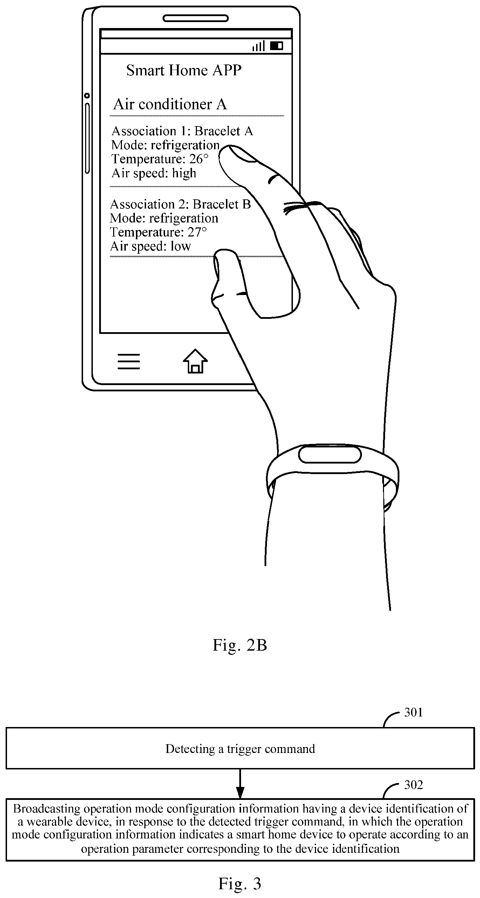

For example, as shown in Fig. 2B that is a schematic diagram of a smart home application in a smart terminal, the user establishes the association relationship between a smart air conditioner A and two smart bracelets (smart bracelet A and smart bracelet B). The user may associate the air conditioner A with the smart bracelets A and B via the application, and may set corresponding operation parameters (such as temperature, mode and air speed of the air conditioner) for each smart bracelet.

After the association is achieved, for the two smart bracelets associated with the air conditioner A, the smart terminal may send device identifications of the smart bracelets A and B and the operation parameters set for each smart bracelet to the air conditioner A, and the air conditioner A receives and stores the above information in the association relationship table.

The smart terminal may send both the device identifications and the operation parameters of the smart bracelets to the smart air conditioner, such that the smart bracelet may carry its own device identification in the operation mode configuration information when sending the operation mode configuration information, and the smart air conditioner may search the association relationship table and find the corresponding operation parameter after receiving the operation mode configuration information containing the device identification of the smart bracelet.

Second manner: the wearable device and the smart home device directly establish the association between them.

In this embodiment of the present disclosure, the wearable device may be mated with the smart home device, for example, via a Bluetooth communication component or a NFC (Near Field Communication) component.

For example, for the smart air conditioner, a mating option set in its remote control may be utilized, such that the smart air conditioner as a master device for mating connection starts establishing the mating connection with the wearable device as a slave device after the user selects the mating option. During the mating connection, both the smart air conditioner and the wearable device open the Bluetooth function, such that the smart air conditioner searches for the mating information of the wearable device and the wearable device broadcasts its device identification via Bluetooth. The smart air conditioner records the device identification after finding the device identification sent by the smart bracelet, thus completing the mating process.

After the bluetooth mating is successful, the user may set the corresponding operation parameter for the bracelet via the remote control and the smart air conditioner may store the device identification and the operation parameter in the association relationship table. Hence, the smart bracelet may carry its own device identification in the operation mode configuration information when sending the information, and then the smart air conditioner may search the association relationship table and find out the corresponding operation parameter after receiving the operation mode configuration information containing the device identification of the smart bracelet.

In the above embodiment, the smart home device may establish the association relationship with the wearable device in advance and store the device identification and the operation parameter of the associated wearable device in the association relationship table, which is easy to implement, and the operation mode configuration information sent by the wearable device only needs to contain the device identification, which reduces the resource consumption of the wearable device.

Second way: the operation parameter corresponding to the device identification is obtained from the operation mode configuration information.

In this embodiment, the operation mode configuration information of the wearable device may carry its own device identification as well as the operation parameter preset by the user. The preset operation parameter in the wearable device may be sent by the smart terminal to the wearable device for storage or be sent by the smart home device to the wearable device for storage, after the association relationship is established between the wearable device and the smart home device, as illustrated in the first way.

According to the above embodiment, the smart home device may directly parse out the device identification and the operation parameter upon receiving the operation mode configuration information, so it is possible to determine the operation parameter corresponding to the wearable device quickly and to improve the working efficiency.

In an alternative implementation, the step of obtaining the operation parameter corresponding to the device identification includes: obtaining the operation parameter corresponding to the device identification, in response to determining that the wearable device is an associated device according to the device identification.

In this embodiment of the present disclosure, it is possible to judge whether the wearable device is an associated device according to the device identification; if the wearable device is determined as the associated device, it means that the wearable device has the authority to control the smart home device which further obtains the operation parameter corresponding to the wearable device for operating. If the wearable device is not the associated device, it means that the wearable device has no control authority.

According to the above embodiment, it is first determined that the wearable device is the associated device according to the device identification, before the operation parameter corresponding to the device identification is obtained, which may improve the security performance of the smart home device.

In an alternative implementation, the step of obtaining the operation parameter corresponding to the device identification includes: obtaining the operation parameter corresponding to the device identification, in response to determining that the wearable device is located within a preset range.

In this embodiment of the present disclosure, it is possible to determine the distance from the wearable device to the smart home device; if the distance is far beyond the preset range, the wearable device may be ignored and only wearable devices in a short distance from the smart home device are considered. The preset range may be with a 3-meter radius or with a 5-meter radius, and may be adjusted flexibly according to requirements in practical use, which will not be limited herein.

Before obtaining the operation parameter corresponding to the device identification in response to determining that the wearable device is located within a preset range, a RSSI (Received Signal Strength Indication) may be obtained when receiving the operation mode configuration information. The wearable device may be determined within the preset range, in response to determining that the RSSI is higher than a preset strength threshold.

In this embodiment of the present disclosure, the RSSI may be obtained when the operation mode configuration information sent by the wearable device is received. If the strength is high, it may be determined that the wearable device is close to the smart home device; if the strength is low, it may be determined that the wearable device is far away from the smart home device. In practical use, the strength threshold may be set flexibly by those skilled in the art according to demands.

It shall be noted that the two implementations for obtaining priority levels and operation parameters corresponding to the device identification (determining whether each wearable device is an associated wearable device and determining whether each wearable device is located within a preset range) may be executed individually and in parallel or may be executed concurrently in practical use. When the two implementations are executed concurrently, the execution sequence may be adjusted. That is, the step of determining whether each wearable device is an associated wearable device may be before or after the step of determining whether each wearable device is located within a preset range.

According to the above embodiment, the corresponding operation parameter is further obtained after the wearable device is determined to be within a close range, which facilitates flexible control on the operation of the smart home device and thus brings convenience to the user.

In step 203, operation is performed according to the operation parameter.

The smart home device may operate according to the operation parameter upon obtaining the operation parameter corresponding to the device identification. According to the above embodiment, the smart home device may operate according to the corresponding operation parameter automatically as long as the device identification of the wearable device is detected, and thus it is unnecessary for the user to manually adjust the operation mode of the smart device frequently, which brings convenience to the user.

Fig. 3 is a flow chart of a method for controlling a device according to an example embodiment. As shown in Fig.3, the method may be applied to the wearable device in Fig. 1, and include the following steps.

In step 301, a trigger command is detected.

When the user needs to adjust an smart home device - making the smart home device work according to an operation parameter preset by the user, the user may input the trigger command to a wearable device which the user takes along, and thus the wearable device sends operation mode configuration information to the smart home device after detecting the trigger command.

In step 302, the operation mode configuration information containing a device identification of the wearable device is broadcast, in response to the detected trigger command, in which the operation mode configuration information indicates the smart home device to operate according to the operation parameter corresponding to the device identification.

As for in response to the detected trigger command, it may include: in response to detecting that the wearable device is tapped for a preset number of times; or in response to detecting that the wearable device is shaken for a preset number of times.

For example, when the user taps the wearable device twice or shakes the wearable device for three times, the trigger command is ascertained to be received, and the preset operation mode configuration information containing the device identification of the wearable device is broadcast, such that the smart home device works according to the operation parameter corresponding to the device identification after receiving the operation mode configuration information.

In the above embodiment, the operation mode configuration information may be sent by the wearable device rapidly for controlling smart home device, as longs as the user performs simple operations, which is simple to implement and thus brings convenience to the user.

In this embodiment of the present disclosure, the wearable device may send out the operation mode configuration information containing the device identification automatically after receiving the trigger command of the user, and indicate the smart home device to operate according to the operation parameter corresponding to the device identification via the operation mode configuration information. In this embodiment, it is unnecessary for the user to manually adjust the operation mode of the smart device frequently, which brings convenience to the user.

In an alternative implementation, the operation mode configuration information further includes the operation parameter corresponding to the device identification.

In this embodiment, the operation mode configuration information of the wearable device may carry its own device identification and the preset operation parameter. The wearable device may establish the association relationship with the smart home device in advance, and then receive the operation parameter sent by the smart terminal or sent by the smart home device for storage after the association relationship is established.

According to the above embodiment, since the operation mode configuration information of the wearable device also carries the preset operation parameter, the smart home device may directly parse out the device identification and the operation parameter upon receiving the operation mode configuration information, and thus it is possible to determine the operation parameter corresponding to the wearable device quickly and to improve the working efficiency.

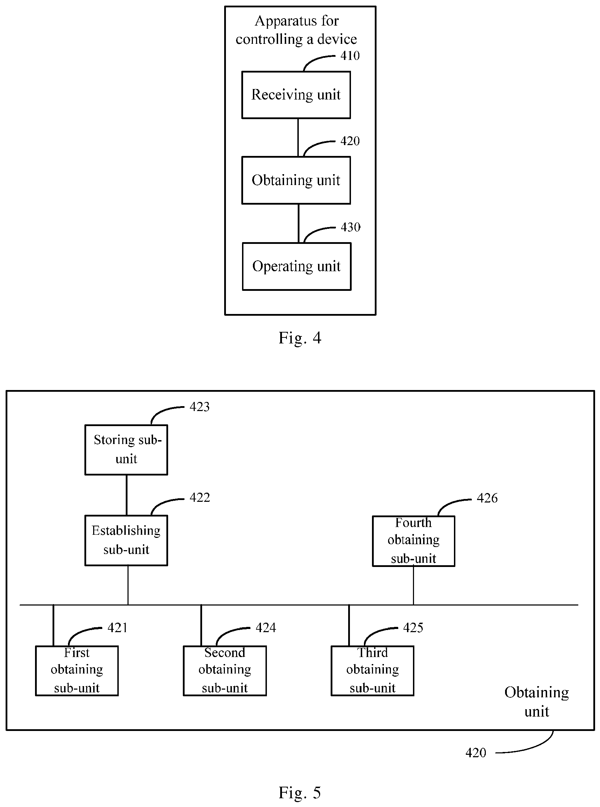

Fig. 4 is a block diagram of an apparatus for controlling a device according to an example embodiment of the present disclosure. As shown in Fig. 4, the apparatus includes a receiving unit 410, an obtaining unit 420 and an operating unit 430.

The receiving unit 410 is configured to receive operation mode configuration information broadcast by a wearable device, the operation mode configuration information having a device identification corresponding to the wearable device.

The obtaining unit 420 is configured to obtain an operation parameter corresponding to the device identification received by the receiving unit 410.

The operating unit 430 is configured to operate according to the operation parameter obtained by the obtaining unit 420.

According to the above embodiment, the wearable device sends out the operation mode configuration information containing the device identification, such that the smart home device may obtain the operation parameter corresponding to the device identification and operate according to the operation parameter. In the present disclosure, the smart device may operate automatically according to the corresponding operation parameter as long as the device identification of the wearable device is detected, and thus the user does not need to manually adjust the operation mode of the smart device frequently, which brings convenience to the user.

Fig. 5 is a block diagram of another apparatus for controlling a device according to an example embodiment of the present disclosure. As shown in Fig. 5, based on the embodiment shown in Fig. 4, the obtaining unit 420 includes a first obtaining sub-unit 421 configured to obtain the operation parameter corresponding to the device identification received by the receiving unit 410 from a preset association relationship table recording correspondence between device identifications and operation parameters of associated wearable devices.

According to the above embodiment in the present disclosure, the operation parameter is obtained from the preset association relationship table, which is easy to implement, and the operation mode configuration information sent by the wearable device only needs to contain the device identification, which reduces the resource consumption of the wearable device.

In an embodiment, the obtaining unit 420 further includes an establishing sub-unit 422 and a storing sub-unit 423.

The establishing sub-unit 422 is configured to establish an association relationship with a wearable device.

The storing sub-unit 423 is configured to obtain the device identification and the operation parameter of the associated wearable device in the establishing sub-unit 422, and store the device identification and the operation parameter in the association relationship table.

According to the above embodiment, the smart home device in the present disclosure may establish the association relationship with the wearable device in advance and store the device identification and the operation parameter of the associated wearable device in the association relationship table, which is easy to implement, and the operation mode configuration information sent by the wearable device only needs to carry the device identification, which reduces the resource consumption of the wearable device.

In an embodiment, the obtaining unit 420 further includes a second obtaining sub-unit 424 configured to obtain the operation parameter corresponding to the device identification from the operation mode configuration information received by the receiving unit 410.

According to the above embodiment, the smart home device in the present disclosure may directly parse out the device identification and the operation parameter upon receiving the operation mode configuration information, so it is possible to determine the operation parameter corresponding to the wearable device quickly and to improve the working efficiency.

In an embodiment, the obtaining unit 420 further includes a third obtaining sub-unit 425 configured to obtain the operation parameter corresponding to the device identification, in response to determining that the wearable device is an associated device according to the device identification received by the receiving unit 410.

According to the above embodiment, in the present disclosure, it is first determined that the wearable device is the associated device according to the device identification, before the operation parameter corresponding to the device identification is obtained, which may improve the security performance of the smart home device.

In an embodiment, the obtaining unit 420 further includes a fourth obtaining sub-unit 426 configured to obtain the operation parameter corresponding to the device identification received by the receiving unit 410, in response to determining that the wearable device is located within a preset range.

According to the above embodiment, the corresponding operation parameter is further obtained after it is determined that the wearable device is within a close range, which facilitates flexible control on the operation of the smart home device and thus brings convenience to the user.

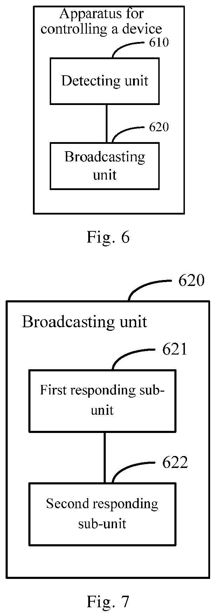

Fig. 6 is a block diagram of another apparatus for controlling a device according to an example embodiment of the present disclosure. As shown in Fig. 6, the apparatus includes a detecting unit 610 and a broadcasting unit 620.

The detecting unit 610 is configured to detect a trigger command.

The broadcasting unit 620 is configured to broadcast operation mode configuration information having a device identification of a wearable device, in response to the trigger command detected by the detecting unit 610, in which the operation mode configuration information indicates an smart home device to operate according to an operation parameter corresponding to the device identification.

According to the above embodiment, the wearable device in the present disclosure may send out the operation mode configuration information containing the device identification automatically upon receiving the trigger command from the user; the operation mode configuration information indicates the smart home device to operate according to the operation parameter corresponding to the device identification. In the present disclosure, it is unnecessary for the user to manually adjust the operation mode of the smart device frequently, which brings convenience to the user.

Fig. 7 is a block diagram of another apparatus for controlling a device according to an example embodiment of the present disclosure. As shown in Fig. 7, based on the embodiment shown in Fig. 6, the broadcasting unit 620 includes any one of a first responding sub-unit 621 and a second responding sub-unit 622. For the sake of illustration, both the above two sub-units are shown in Fig. 7.

The first responding sub-unit 621 is configured to respond to detecting that the wearable device is tapped for a preset number of times.

The second responding sub-unit 622 is configured to respond to detecting that the wearable device is shaken for a preset number of times.

According to the above embodiment, the operation mode configuration information may be sent by the wearable device rapidly for controlling the home device, as long as the user performs simple operations, which is simple to implement and thus brings convenience to the user.

In an embodiment, the operation mode configuration information further includes the operation parameter corresponding to the device identification.

According to the above embodiment, since the operation mode configuration information of the wearable device also carries the preset operation parameter, the smart home device may directly parse out the device identification and the operation parameter upon receiving the operation mode configuration information, and thus it is possible to determine the operation parameter corresponding to the wearable device quickly and to improve the working efficiency.

Accordingly, the present disclosure further provides an apparatus. The apparatus includes a processor, and a memory configured to store instructions executable by the processor, in which the processor is configured to: receive operation mode configuration information broadcast by a wearable device, the operation mode configuration information having a device identification corresponding to the wearable device; obtain an operation parameter corresponding to the device identification; and operate according to the operation parameter.

Accordingly, the present disclosure further provides an apparatus. The apparatus includes a processor, and a memory configured to store instructions executable by the processor, in which the processor is configured to: detect a trigger command; and broadcast operation mode configuration information having a device identification of a wearable device, in response to the detected trigger command, in which the operation mode configuration information indicates an smart home device to operate according to an operation parameter corresponding to the device identification.

Accordingly, the present disclosure further provides a system for controlling a device. The system includes: an smart home device configured to receive operation mode configuration information broadcast by a wearable device, the operation mode configuration information having a device identification corresponding to the wearable device, to obtain an operation parameter corresponding to the device identification, and to operate according to the operation parameter; and the wearable device configured to detect a trigger command, and to broadcast the operation mode configuration information in response to the detected trigger command.

With respect to the apparatuses in the above embodiments, the specific manners for performing functions and operations for individual units therein have been described in detail in the embodiments regarding the methods for controlling devices, which will not be elaborated herein.

The apparatus embodiment is substantially corresponding to the method embodiment, so relevant part of illustration of the method embodiment may be referred to. The apparatus embodiment described above is only exemplary, in which the units described as separate components may be or may not be physically separate; the component as the displaying unit may be or not be a physical unit, i.e. may be located at a position or be distributed at many network elements. It is possible to select part of or all of the modules to realize the objective of the present disclosure, which may be understood and implemented by those skilled in the art without paying more creative effort.

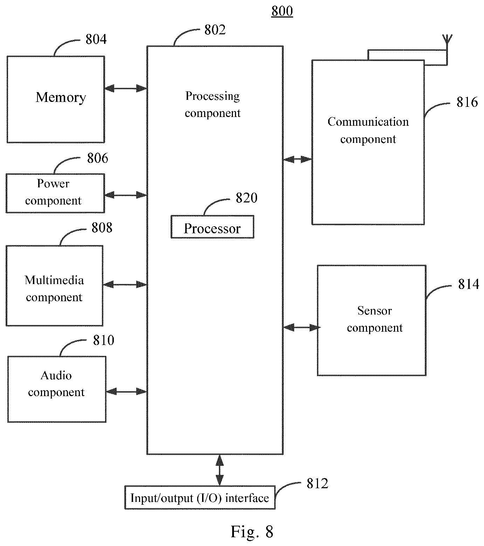

Fig. 8 is a block diagram of an apparatus 800 for controlling a device according to an example embodiment of the present disclosure. For example, the apparatus 800 may be a mobile phone, a computer, a digital broadcasting terminal, message sending and receiving equipment, a game controller, a tablet device, a medical device, fitness equipment and a personal digital assistant.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of a mobile terminal, cause the mobile terminal to perform a method for controlling a device.

Other embodiments of the present disclosure will be apparent to those skilled in the art from consideration of the specification and practice of the disclosure disclosed here. This application is intended to cover any variations, uses, or adaptations of the invention following the general principles thereof and including such departures from the present disclosure as come within known or customary practice in the art.

## Claims

1. A method for controlling a smart home device, comprising:
receiving (201) operation mode configuration information broadcast by a wearable device, the operation mode configuration information comprising a device identification corresponding to the wearable device;
obtaining (202) an operation parameter corresponding to the device identification, comprising: obtaining the operation parameter corresponding to the device identification from a preset association relationship table recording correspondence between device identifications and operation parameters of associated wearable devices; and
operating (203) the smart home device according to the operation parameter;
wherein obtaining (202) an operation parameter corresponding to the device identification comprises:
obtaining the operation parameter corresponding to the device identification, in response to determining that the wearable device is located within a preset range.

2. The method according to claim 1, further comprising:
establishing an association relationship with a wearable device;
obtaining the device identification and the operation parameter of the associated wearable device, and storing the device identification and the operation parameter in the association relationship table.

3. The method according to any one of the preceding claims, wherein obtaining (202) an operation parameter corresponding to the device identification comprises:
obtaining the operation parameter corresponding to the device identification from the operation mode configuration information.

4. The method according to any one of the preceding claims, wherein obtaining (202) an operation parameter corresponding to the device identification comprises:
obtaining the operation parameter corresponding to the device identification, in response to determining that the wearable device is an associated device according to the device identification.

5. An apparatus for controlling a smart home device, comprising:
a receiving unit (410), configured to receive operation mode configuration information broadcast by a wearable device, the operation mode configuration information comprising a device identification corresponding to the wearable device;
an obtaining unit (420), configured to obtain an operation parameter corresponding to the device identification received by the receiving unit (410); and
an operating unit (430), configured to operate the smart home device according to the operation parameter obtained by the obtaining unit (420),
wherein the obtaining unit (420) comprises:
a first obtaining sub-unit (421), configured to obtain the operation parameter corresponding to the device identification received by the receiving unit (410) from a preset association relationship table recording correspondence between device identifications and operation parameters of associated wearable devices, and
a fourth obtaining sub-unit (426), configured to obtain the operation parameter corresponding to the device identification received by the receiving unit (410), in response to determining that the wearable device is located within a preset range.

6. The apparatus according to claim 5, wherein the obtaining unit (420) further comprises:
an establishing sub-unit (422), configured to establish an association relationship with a wearable device; and
a storing sub-unit (423), configured to obtain the device identification and the operation parameter of the associated wearable device, and to store the device identification and the operation parameter in the association relationship table.

7. The apparatus according to claim 5 or 6, wherein the obtaining unit (420) comprises:
a second obtaining sub-unit (424), configured to obtain the operation parameter corresponding to the device identification from the operation mode configuration information received by the receiving unit (410).

8. The apparatus according to any one of claims 5 to 7, wherein the obtaining unit (420) comprises:
a third obtaining sub-unit (425), configured to obtain the operation parameter corresponding to the device identification, in response to determining that the wearable device is an associated device according to the device identification received by the receiving unit (410).

9. A system for controlling a smart home device, comprising:
the smart home device, configured to receive operation mode configuration information broadcast by a wearable device, the operation mode configuration information comprising a device identification corresponding to the wearable device, to obtain an operation parameter corresponding to the device identification in response to determining that the wearable device is located within a preset range, and to operate according to the operation parameter, wherein the operation parameter is obtained from a preset association relationship table recording correspondence between device identifications and operation parameters of associated wearable devices; and
the wearable device, configured to detect a trigger command, and to broadcast the operation mode configuration information in response to the detected trigger command.

10. A computer program including instructions for executing steps of a method for controlling a smart home device according to any one of claims 1 to 4 when said program is executed by a computer.

11. A recording medium readable by a computer and having recorded thereon a computer program according to claim 10.

## Patentansprüche

1. Verfahren zum Steuern eines Smart-Home-Geräts bzw. intelligenten Heimgeräts, umfassend:
Empfangen (201) von Betriebsmodus-Konfigurationsinformationen, die von einem tragbaren Gerät gesendet werden, wobei die Betriebsmodus-Konfigurationsinformationen eine Geräteidentifikation umfassen, die dem tragbaren Gerät entspricht;
Erhalten (202) eines Betriebsparameters, der der Geräteidentifikation entspricht, umfassend: Erhalten des Betriebsparameters, der der Geräteidentifikation entspricht, aus einer voreingestellten Zuordnungsbeziehungstabelle, die die Entsprechung zwischen Geräteidentifikationen und Betriebsparametern zugeordneter tragbarer Geräte aufzeichnet; und
Betreiben (203) des Smart-Home-Geräts entsprechend den Betriebsparametern;
wobei das Erhalten (202) eines Betriebsparameters, der der Geräteidentifikation entspricht, umfasst:
Erhalten des Betriebsparameters, der der Geräteidentifikation entspricht, als Reaktion auf die Feststellung, dass sich das tragbare Gerät innerhalb eines voreingestellten Bereichs befindet.

2. Verfahren nach Anspruch 1, ferner umfassend:
Herstellen einer Zuordnungsbeziehung mit einem tragbaren Gerät;
Erhalten der Geräteidentifikation und des Betriebsparameters des zugehörigen tragbaren Geräts, und Speichern der Geräteidentifikation und des Betriebsparameters in der Zuordnungsbeziehungstabelle.

3. Verfahren nach einem der vorhergehenden Ansprüche, wobei das Erhalten (202) eines Betriebsparameters, der der Geräteidentifikation entspricht, umfasst:
Erhalten des Betriebsparameters, der der Geräteidentifikation entspricht, aus der Betriebsmodus-Konfigurationsinformation.

4. Verfahren nach einem der vorhergehenden Ansprüche, wobei das Erhalten (202) eines Betriebsparameters, der der Geräteidentifikation entspricht, umfasst:
Erhalten des Betriebsparameters, der der Geräteidentifikation entspricht, als Reaktion auf die Feststellung, dass das tragbare Gerät ein zugehöriges Gerät gemäß der Geräteidentifikation ist.

5. Vorrichtung zum Steuern eines Smart-Home-Geräts, die Folgendes umfasst:
eine Empfangseinheit (410), die so konfiguriert ist, dass sie von einem tragbaren Gerät gesendete Betriebsmodus-Konfigurationsinformationen empfängt, wobei die Betriebsmodus-Konfigurationsinformationen eine dem tragbaren Gerät entsprechende Gerätekennung umfassen;
eine Erhaltungseinheit (420), die konfiguriert ist, um einen Betriebsparameter zu erhalten, der der von der Empfangseinheit (410) empfangenen Geräteidentifikation entspricht; und
eine Bedieneinheit (430), die so konfiguriert ist, dass sie das Smart-Home-Gerät entsprechend den von der Erfassungseinheit (420) erhaltenen Betriebsparametern bedient,
wobei die Erhaltungseinheit (420) umfasst:
eine erste Erhaltungssuntereinheit (421), die so konfiguriert ist, dass sie den Betriebsparameter, der der von der Empfangseinheit (410) empfangenen Geräteidentifikation entspricht, aus einer voreingestellten Zuordnungsbeziehungstabelle erhält, die die Entsprechung zwischen Geräteidentifikationen und Betriebsparametern zugeordneter tragbarer Geräte aufzeichnet, und
eine vierte Erhaltungsuntereinheit (426), die so konfiguriert ist, dass sie den Betriebsparameter, der der von der Empfangseinheit (410) empfangenen Geräteidentifikation entspricht, in Reaktion auf die Feststellung, dass sich das tragbare Gerät innerhalb eines voreingestellten Bereichs befindet, erfasst.

6. Vorrichtung nach Anspruch 5, wobei die Erhaltungseinheit (420) ferner umfasst:
eine Aufbau-Untereinheit (422), die so konfiguriert ist, dass sie eine Zuordnungsbeziehung mit einer tragbaren Vorrichtung herstellt; und
eine Speicheruntereinheit (423), die so konfiguriert ist, dass sie die Geräteidentifikation und den Betriebsparameter des zugehörigen tragbaren Geräts erhält und die Geräteidentifikation und den Betriebsparameter in der Zuordnungsbeziehungstabelle speichert.

7. Vorrichtung nach Anspruch 5 oder 6, wobei die Erhaltungseinheit (420) umfasst:
eine zweite Erhaltungsuntereinheit (424), die so konfiguriert ist, dass sie den Betriebsparameter, der der Geräteidentifikation entspricht, aus den von der Empfangseinheit (410) empfangenen Betriebsmodus-Konfigurationsinformationen erhält.

8. Vorrichtung nach einem der Ansprüche 5 bis 7, wobei die Erhaltungseinheit (420) umfasst:
eine dritte Erhaltungsuntereinheit (425), die so konfiguriert ist, dass sie den Betriebsparameter, der der Geräteidentifikation entspricht, in Reaktion auf die Bestimmung, dass das tragbare Gerät ein zugehöriges Gerät ist, gemäß der von der Empfangseinheit (410) empfangenen Geräteidentifikation erhält.

9. System zur Steuerung eines Smart-Home-Geräts, das Folgendes umfasst:
das Smart-Home-Gerät, das so konfiguriert ist, dass es Betriebsmodus-Konfigurationsinformationen empfängt, die von einem tragbaren Gerät gesendet werden, wobei die Betriebsmodus-Konfigurationsinformationen eine Geräteidentifikation umfassen, die dem tragbaren Gerät entspricht, um einen Betriebsparameter zu erhalten, der der Geräteidentifikation entspricht, als Reaktion auf die Feststellung, dass sich das tragbare Gerät innerhalb eines voreingestellten Bereichs befindet, und um gemäß dem Betriebsparameter zu arbeiten, wobei der Betriebsparameter aus einer voreingestellten Zuordnungsbeziehungstabelle erhalten wird, die die Entsprechung zwischen Geräteidentifikationen und Betriebsparametern von zugeordneten tragbaren Geräten aufzeichnet; und
das tragbare Gerät, das so konfiguriert ist, dass es einen Auslösebefehl erkennt und die Betriebsmodus-Konfigurationsinformationen als Reaktion auf den erkannten Auslösebefehl sendet.

10. Computerprogramm mit Anweisungen zum Ausführen von Schritten eines Verfahrens zum Steuern eines Smart-Home-Geräts nach einem der Ansprüche 1 bis 4, wenn das Programm von einem Computer ausgeführt wird.

11. Speichermedium, das von einem Computer gelesen werden kann und auf dem ein Computerprogramm nach Anspruch 10 gespeichert ist.

## Revendications

1. Procédé de commande d'un dispositif domestique intelligent, comprenant :
recevoir (201) des informations de configuration de mode de fonctionnement diffusées par un dispositif portable, les informations de configuration de mode de fonctionnement comprenant une identification de dispositif correspondant au dispositif portable ;
obtenir (202) d'un paramètre de fonctionnement correspondant à l'identification du dispositif, comprenant : obtenir du paramètre de fonctionnement correspondant à l'identification du dispositif à partir d'une table de relations d'association prédéfinie enregistrant la correspondance entre les identifications de dispositifs et les paramètres de fonctionnement des dispositifs portables associés ; et
faire fonctionner (203) le dispositif domestique intelligent en fonction du paramètre de fonctionnement ;
dans lequel obtenir (202) d'un paramètre de fonctionnement correspondant à l'identification du dispositif comprend :
obtenir le paramètre de fonctionnement correspondant à l'identification du dispositif, en réponse à la détermination du fait que le dispositif portable est situé dans une plage prédéfinie.

2. Procédé selon la revendication 1, comprenant en outre :
établir une relation d'association avec un dispositif portable ;
obtenir l'identification du dispositif et le paramètre de fonctionnement du dispositif portable associé, et stocker l'identification du dispositif et le paramètre de fonctionnement dans la table de relation d'association.

3. Procédé selon l'une quelconque des revendications précédentes, dans lequel obtenir (202) d'un paramètre de fonctionnement correspondant à l'identification du dispositif comprend :
obtenir le paramètre de fonctionnement correspondant à l'identification du dispositif à partir des informations de configuration du mode de fonctionnement.

4. Procédé selon l'une quelconque des revendications précédentes, dans lequel obtenir (202) d'un paramètre de fonctionnement correspondant à l'identification du dispositif comprend :
obtenir le paramètre de fonctionnement correspondant à l'identification du dispositif, en réponse à la détermination que le dispositif portable est un dispositif associé selon l'identification du dispositif.

5. Appareil pour commander un dispositif domestique intelligent, comprenant :
une unité de réception (410), configurée pour recevoir des informations de configuration de mode de fonctionnement diffusées par un dispositif portable, les informations de configuration de mode de fonctionnement comprenant une identification de dispositif correspondant au dispositif portable ;
une unité d'obtention (420), configurée pour obtenir un paramètre de fonctionnement correspondant à l'identification du dispositif reçue par l'unité de réception (410) ; et
une unité d'exploitation (430), configurée pour faire fonctionner le dispositif domestique intelligent selon le paramètre d'exploitation obtenu par l'unité d'obtention (420),
dans lequel l'unité d'obtention (420) comprend :
une première sous-unité d'obtention (421), configurée pour obtenir le paramètre de fonctionnement correspondant à l'identification de dispositif reçue par l'unité de réception (410) à partir d'une table de relation d'association prédéfinie enregistrant la correspondance entre les identifications de dispositif et les paramètres de fonctionnement des dispositifs portables associés, et
une quatrième sous-unité d'obtention (426), configurée pour obtenir le paramètre de fonctionnement correspondant à l'identification du dispositif reçue par l'unité de réception (410), en réponse à la détermination que le dispositif portable est situé dans une plage prédéfinie.

6. Appareil selon la revendication 5, dans lequel l'unité d'obtention (420) comprend en outre :
une sous-unité d'établissement (422), configurée pour établir une relation d'association avec un dispositif portable ; et
une sous-unité de stockage (423), configurée pour obtenir l'identification de dispositif et le paramétre de fonctionnement du dispositif portable associé, et pour stocker l'identification de dispositif et le paramètre de fonctionnement dans la table de relation d'association.

7. Appareil selon la revendication 5 ou 6, dans lequel l'unité d'obtention (420) comprend :
une seconde sous-unité d'obtention (424), configurée pour obtenir le paramètre de fonctionnement correspondant à l'identification du dispositif à partir des informations de configuration de mode de fonctionnement reçues par l'unité de réception (410).

8. Appareil selon l'une quelconque des revendications 5 à 7, dans lequel l'unité d'obtention (420) comprend :
une troisième sous-unité d'obtention (425), configurée pour obtenir le paramètre de fonctionnement correspondant à l'identification de dispositif, en réponse à la détermination que le dispositif portable est un dispositif associé selon l'identification de dispositif reçue par l'unité de réception (410).

9. Système pour commander un dispositif domestique intelligent, comprenant :
le dispositif domestique intelligent, configuré pour recevoir des informations de configuration de mode de fonctionnement diffusées par un dispositif portable, les informations de configuration de mode de fonctionnement comprenant une identification de dispositif correspondant au dispositif portable, pour obtenir un paramètre de fonctionnement correspondant à l'identification de dispositif en réponse à la détermination que le dispositif portable est situé dans une plage prédéfinie, et pour fonctionner selon le paramètre de fonctionnement, dans lequel le paramètre de fonctionnement est obtenu à partir d'une table de relation d'association prédéfinie enregistrant la correspondance entre les identifications de dispositif et les paramètres de fonctionnement des dispositifs portables associés ; et
le dispositif portable, configuré pour détecter une commande de déclenchement, et pour diffuser les informations de configuration du mode de fonctionnement en réponse à la commande de déclenchement détectée..

10. Programme informatique comprenant des instructions pour exécuter des étapes d'un procédé de commande d'un dispositif domestique intelligent selon l'une quelconque des revendications 1 à 4 lorsque ledit programme est exécuté par un ordinateur.

11. Support d'enregistrement lisible par un ordinateur et sur lequel est enregistré un programme informatique selon la revendication 10.
